(19) Europäisches Patentamt / European Patent Office / Office européen des brevets

(11) **EP 3 020 148 B1**

(12) **FASCICULE DE BREVET EUROPEEN**

(45) Date de publication et mention de la délivrance du brevet:
**30.08.2017 Bulletin 2017/35**

(21) Numéro de dépôt: **14747088.4**

(22) Date de dépôt: **09.07.2014**

(51) Int Cl.:
*H04B 10/077* (2013.01)   *H04B 10/079* (2013.01)

(86) Numéro de dépôt international:
**PCT/FR2014/051767**

(87) Numéro de publication internationale:
**WO 2015/004390 (15.01.2015 Gazette 2015/02)**

(54) **DÉTERMINATION D'UN RAPPORT SIGNAL À BRUIT OPTIQUE D'UN SIGNAL OPTIQUE A DOUBLE POLARISATION**

BESTIMMUNG EINES OPTISCHEN SIGNAL-RAUSCH-VERHÄLTNISSES EINES OPTISCHEN DUALPOLARISATIONSSIGNALS

DETERMINATION OF AN OPTICAL SIGNAL TO NOISE RATIO OF A DUAL POLARIZATION OPTICAL SIGNAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.07.2013 FR 1356783**

(43) Date de publication de la demande:
**18.05.2016 Bulletin 2016/20**

(73) Titulaire: **Orange**
**75015 Paris (FR)**

(72) Inventeurs:
• **PINCEMIN, Erwan**
  **F-22290 Gommenec'h (FR)**
• **LOUSSOUARN, Yann**
  **F-22300 Lannion (FR)**

(74) Mandataire: **Vidon Brevets & Stratégie**
**16B, rue de Jouanet**
**B.P. 90333**
**Technopole Atalante**
**35703 Rennes Cedex 7 (FR)**

(56) Documents cités:
**EP-A1- 2 264 916     WO-A1-2008/122123**
**WO-A1-2011/097734**

• **DANIEL GARIEPY ET AL: "Novel OSA-based method for in-band OSNR measurement", OPTICAL FIBER COMMUNICATION (OFC), COLLOCATED NATIONAL FIBER OPTIC ENGINEERS CONFERENCE, 2010 CONFERENCE ON (OFC/NFOEC), IEEE, PISCATAWAY, NJ, USA, 21 mars 2010 (2010-03-21), pages 1-3, XP031677268,**

## Description

### 1. Domaine de l'invention

Le domaine de l'invention est celui des communications optiques et, plus précisément, celui de la mesure du rapport signal à bruit optique (en anglais OSNR pour « Optical Signal to Noise Ratio ») de signaux optiques, notamment des signaux optiques cohérents à double polarisation, afin d'évaluer la qualité de transmission entre l'émission et la réception.

L'invention trouve notamment des applications dans les systèmes de transmission optique mettant en oeuvre un multiplexage en longueur d'onde (en anglais WDM pour « Wavelength Division Multiplexing »), utilisant une modulation à double polarisation, par exemple une modulation en quadrature de phase (en anglais QPSK pour « Quadrature Phase Shift Keying ») ou encore une modulation d'amplitude à seize états (en anglais 16QAM pour « 16 state Quadrature Amplitude Modulation»).

### 2. Art antérieur

Dans les systèmes de transmission WDM, le bruit de phase introduit par les lasers (laser d'émission et oscillateur local) et par la ligne de transmission (bruit lié à l'émission spontanée amplifiée, en anglais ASE pour « Amplified Spontaneous Emission», et effets non-linéaires) est important. Afin d'évaluer ce bruit, une mesure du rapport signal à bruit optique est habituellement mise en oeuvre.

Pour des systèmes de transmission classiques, la détermination du rapport signal à bruit optique OSNR en mode intra-bande (en anglais « in-band ») est très populaire depuis quelques années car elle permet, au regard du mode hors-bande, de connaître l'OSNR du canal observé sans avoir besoin de suspendre la transmission en cours sur ce canal (pour voir le bruit d'ASE associé au canal observé) ou sans avoir besoin d'arrêter les transmissions en cours sur les canaux voisins immédiats du canal observé (pour voir le bruit d'ASE qui se trouve de part et d'autre du canal observé). Ces techniques de mesure de l'OSNR associées aux systèmes de transmission classiques ne sont malheureusement pas adaptées pour un système de transmission WDM lorsqu'il est en cours de service, sous peine d'interrompre les transmissions.

Une méthode de mesure de l'OSNR intra-bande d'un canal optique à simple polarisation mis en oeuvre dans un système WDM a été proposée il y a quelques années pour éviter d'arrêter la transmission en cours sur le canal à observer ou encore pour éviter de suspendre la ou les transmission(s) en cours sur les canaux voisins du canal à observer.

Plus précisément, cette méthode repose sur la dualité existant entre la polarisation du canal WDM à simple polarisation et le bruit d'ASE accumulé dans la chaîne d'amplificateurs optiques. En effet, le bruit d'ASE accumulé dans la chaîne d'amplificateurs optiques est par nature dépolarisé, en d'autres termes tous les états de polarisation de la sphère de Poincaré sont également représentés en termes de puissance dans le bruit d'ASE.

Selon cette méthode, il est supposé que le signal optique reçu, après transmission dans le canal optique, a une polarisation linéaire en arrivant sur l'appareil de détermination de l'OSNR intra-bande apte à être connecté à un dispositif de réception. Au préalable, cette méthode met en oeuvre un filtrage du signal à mesurer, filtrant à la fois le signal source et le bruit d'ASE.

Ainsi, en plaçant un polariseur dont l'axe est aligné sur la polarisation du signal à mesurer, il est possible de mesurer la puissance du signal $P_S$ et la moitié de la puissance du bruit d'ASE $P_{ASE}$ (i.e de la contribution du bruit d'ASE qui se trouve dans le signal mesuré). On note $P_X$ cette puissance mesuré sur l'axe de polarisation X.

Puis l'axe du polariseur est modifié de 90° par rapport à l'axe du signal aligné avec l'axe de polarisation X, afin de mesurer l'autre moitié de la contribution du bruit d'ASE (i.e. la contribution du bruit d'ASE orthogonale à la polarisation du signal, et qui se trouve sous le signal). On note $P_Y$ cette puissance mesurée sur l'axe de polarisation Y (correspondant à l'axe formant un angle de 90° avec l'axe de polarisation X).

Une fois ces deux mesures effectuées, l'OSNR intra-bande (i.e l'OSNR du canal mesuré) est déterminé au moyen de l'expression suivante:

$$OSNR = \frac{P_S}{P_{ASE}} = \frac{P_X - P_Y}{2 P_Y}$$

Malheureusement, cette méthode ne permet d'isoler le bruit d'ASE que pour un signal à simple polarisation, et n'est pas applicable à d'autres types de signaux optiques. Elle est notamment inapplicable lorsque l'on veut mesurer l'OSNR intra-bande d'un signal optique à double polarisation, tel que ceux utilisés par exemple aujourd'hui dans les systèmes de transmission WDM cohérent à 40 Gbps et 100 Gbps. Une autre méthode est décrite dans EP2264916. Aujourd'hui, il n'existe pas de méthode de mesure efficace qui pourrait s'appliquer à ce type de signaux. Il existe donc un besoin pour une nouvelle technique de détermination du rapport signal à bruit optique qui soit performante et simple à mettre en oeuvre, notamment pour des signaux à double polarisations.

En outre, afin d'utiliser un même module de détermination du rapport signal à bruit optique pour un signal optique indépendamment du type de polarisation mise en oeuvre, il est nécessaire que la technique de détermination du rapport signal à bruit optique proposée soit compatible pour un signal optique à simple polarisation, à bipolarisation ou encore à d'autre type de polarisation multiple.

## 3. Exposé de l'invention

L'invention propose une solution nouvelle qui ne présente pas les inconvénients de l'art antérieur, sous la forme d'un procédé de détermination d'un rapport signal à bruit optique d'un signal optique à double polarisation.

Selon l'invention, un tel procédé comprend les étapes suivantes :

- détection, dans ledit signal optique à double polarisation, d'un signal de modulation modulant ledit signal optique à double polarisation, sur au moins un niveau inférieur d'amplitude sensiblement nul et un niveau supérieur d'amplitude, et
- détermination dudit rapport signal à bruit optique à partir d'une mesure de puissance dudit signal de modulation.

Il est ainsi possible de déterminer, pour un signal optique, le rapport signal à bruit associé au seul bruit lié à l'émission spontanée amplifiée (ASE), sans que cette mesure ne soit influencée par d'autres bruits comme celui engendré par les effets non-linéaires dans la fibre de transmission. La détermination d'un tel rapport signal à bruit, en fonction seulement du bruit lié à l'émission spontanée amplifiée (ASE), est déterminante notamment pour qualifier les systèmes WDM lors de leur déploiement. L'invention permet donc de dissocier le bruit lié à l'émission spontanée amplifiée (ASE) du bruit résultant d'effets non-linéaires.

En outre, cette technique est particulièrement adaptée à la détermination du rapport signal à bruit optique pour un signal optique à double polarisation. En effet, la technique de l'invention peut reposer sur l'utilisation d'un signal de modulation du signal optique à double polarisation présentant au moins deux niveaux d'amplitude détectables. En d'autres termes, l'invention extrait un signal de modulation du signal optique à double polarisation reçu après sa transmission dans une ligne de transmission optique.

Une fois que les niveaux d'amplitude distincts du signal de modulation sont détectés, l'un étant sensiblement nul, l'invention met en oeuvre une mesure de puissance de ce signal de modulation et non du signal optique à double polarisation reçu dans sa globalité. En effet, le signal de modulation est affecté au même titre que le signal optique reçu à double polarisation par le bruit introduit par la ligne de transmission optique notamment. Ainsi, effectuer une mesure de puissance à partir du seul signal de modulation contenu dans le signal optique à double polarisation reçu revient bien à quantifier le bruit introduit en cours de transmission.

Au regard du signal optique à double polarisation reçu après transmission, l'avantage de l'utilisation du signal de modulation présentant au moins deux niveaux d'amplitude est qu'il facilite la mesure de puissance du fait qu'il ne présente pas une double polarisation.

Ainsi, une bonne précision de mesure est obtenue pour établir ensuite un rapport signal à bruit optique fiable.

Par ailleurs, la technique proposée est simple à implémenter et peu coûteuse en puissance de calculs. En effet, cette technique requiert uniquement une détection du signal de modulation du signal optique. Une telle détection est simple à mettre en oeuvre du fait qu'elle est basée sur la détection des au moins deux niveaux d'amplitude du signal de modulation.

Par exemple, un tel signal de modulation est un signal représenté par une fonction à créneaux présentant au moins deux niveaux d'amplitude. Parmi, les fonction à créneaux, la fonction « porte » périodique et présentant deux niveaux d'amplitude est par exemple utilisée selon l'invention. Les signaux présentant ce type de fonction « porte » sont par exemple des signaux NRZ-OOK délivrée par un modulateur Mach-Zehnder (MZM) ou un modulateur acousto-optique (AOM) avec une réponse indépendante de la polarisation du signal entrant. Ce type de signaux de modulation basés sur une fonction à créneaux périodique sont peu couteux et relativement simple à mettre en oeuvre.

L'invention est avantageusement mise en oeuvre en mode intra-bande (en anglais « in-band ») ce qui permet, au regard du mode hors-bande, de connaître l'OSNR du canal observé sans avoir besoin de suspendre la transmission en cours sur ce canal (pour voir le bruit d'ASE associé au canal observé) ou sans avoir besoin d'arrêter les transmissions en cours sur les canaux voisins immédiats du canal observé (pour voir le bruit d'ASE qui se trouve de part et d'autre du canal observé).

En outre, selon une autre alternative, il est évident que le procédé selon l'invention peut être mis en oeuvre en mode hors-bande.

Selon un mode de réalisation particulier, l'étape de détection comprend une étape de localisation d'un intervalle temporel dédié à une modulation sur lesdits niveaux d'amplitude du signal optique par ledit signal de modulation.

Ainsi, le signal de modulation est facilement détectable du fait qu'il est localisé sur un intervalle temporel dédié, dépourvu de données utiles.

La localisation de cet intervalle est par exemple prédéterminée et connue du module de détermination d'un rapport signal à bruit optique d'un signal optique.

Selon une autre alternative une information de localisation de cet intervalle est reçue par le module de détermination.

La durée de l'intervalle temporel est par exemple au moins égale à cinq cent microsecondes. En outre, cet intervalle temporel est par exemple localisé temporellement toutes les cinq à quinze minutes au sein du signal optique. En d'autres termes, selon un exemple particulier d'implémentation, il est possible de détecter le signal de modulation selon l'invention toutes les cinq minutes sur une durée de cinq cent microsecondes, le signal optique ne présentant pas de données utiles sur cette durée.

Selon un aspect particulier de ce mode de réalisation, les étapes de détection du signal de modulation et de détermination du rapport signal à bruit optique sont mises en oeuvre sur une zone temporelle médiane, dite deuxième zone temporelle, dudit intervalle temporel.

Du fait, que les étapes de détection et de modulation sont mises en oeuvre sur une zone temporelle médiane, appelée deuxième zone temporelle, de l'intervalle temporel, il est assuré sur cette zone médiane qu'aucune données utile du signal optique ne sera présente. On évite donc toute perte d'information lorsque les étapes de détection et de modulation sont mises en oeuvre.

Selon un mode de réalisation particulier de l'invention, l'étape de détection comprend une étape de détection d'une fréquence du signal de modulation, et l'étape de détermination dudit rapport signal à bruit optique comprend les étapes suivantes :

- génération d'un signal de référence, présentant au moins un niveau inférieur d'amplitude sensiblement nul et un niveau supérieur d'amplitude, et dont la fréquence est égale à ladite fréquence détectée,
- décalage temporel du signal de référence par rapport au signal de modulation de sorte que le niveau supérieur d'amplitude du signal de référence soit synchronisé avec le niveau inférieur dudit signal de modulation, délivrant un signal de référence inférieur,
- modulation dudit signal de modulation au moyen dudit signal de référence inférieur, délivrant un premier signal superposé associé au niveau inférieur dudit signal de modulation,
- mesure de puissance dudit premier signal superposé, délivrant une première puissance $P_0$,
- décalage temporel dudit signal de référence par rapport audit signal de modulation de sorte que le niveau supérieur d'amplitude dudit signal de référence soit synchronisé avec le niveau supérieur dudit signal de modulation, délivrant un signal de référence supérieur,
- modulation dudit signal de modulation au moyen dudit signal de référence supérieur, délivrant un deuxième signal superposé associé au niveau supérieur dudit signal de modulation,
- mesure de puissance dudit deuxième signal superposé, délivrant une deuxième puissance $P_1$,
- obtention dudit rapport signal à bruit optique à partir desdites première et deuxième puissances $P_0$ et $P_1$.

Ainsi, le rapport signal à bruit optique d'un signal optique est obtenu selon ce mode de réalisation particulier de l'invention par application de deux mesures de puissance à un signal superposé correspondant à une superposition du signal de modulation du signal optique reçu comprenant une contribution bruitée et un signal de référence sans bruit.

En d'autres termes, on obtient selon l'invention le rapport signal à bruit optique d'un signal optique sous la forme suivante :

$$OSNR = \frac{P_S}{P_{ASE}} = \frac{P_1 - P_0}{P_0}$$

La première mesure de puissance est effectuée lorsque le signal superposé est tel qu'un niveau supérieur d'amplitude du signal de référence est synchronisé avec un niveau inférieur dudit signal de modulation, la puissance $P_0$ correspond dans ce cas à la seule puissance du bruit.

La deuxième mesure de puissance est effectuée lorsque le signal superposé est tel qu'un niveau supérieur d'amplitude du signal de référence est synchronisé avec un niveau supérieur dudit signal de modulation, la puissance $P_1$ correspond dans ce cas à la puissance du signal optique émis et celle du bruit.

Ainsi, une détermination simple et précise du rapport signal à bruit optique d'un signal optique est mise en oeuvre selon l'invention.

Par ailleurs, il est à noter que de manière optionnelle l'étape de génération du signal de référence est suivie d'une étape d'amplification de ce signal de référence.

En outre, selon une autre option, combinable ou non avec l'étape d'amplification ci-dessus, une étape de filtrage optique est préalablement mise en oeuvre pour sélectionner un canal optique sur lequel le signal optique a été transmis.

De plus, selon une particularité de ce mode de réalisation, les étapes de modulation mettent en oeuvre une modification du rapport de cycle du signal de référence de sorte qu'il soit deux fois plus petit que celui du signal de modulation.

Par exemple, lorsque le signal de référence et le signal de modulation avant émission (en d'autres termes : non bruité du fait de la transmission) sont de la forme fonction « porte » périodique et présentent deux niveaux d'amplitude, la durée du niveau d'amplitude inférieur du signal de référence est deux fois plus longue que celle du niveau d'amplitude supérieur, alors que ces deux durées sont égales pour le signal de modulation.

Cette modification du rapport de cycle du signal de référence au regard du signal de modulation permet d'assurer une bonne mesure de puissance des première et deuxième puissances $P_0$ et $P_1$.

En effet, les premières et deuxièmes puissance mesurées sont mesurée sans être perturbées par les transitions entre lesdits au moins deux niveaux d'amplitude du signal de référence et du signal de modulation détecté dans le signal optique reçu.

Selon un aspect particulier de l'invention, la fréquence détectée du signal de modulation est de l'ordre de 1 MHz.

En effet, au regard des systèmes de transmission WDM à 40 Gbps et 100 Gbps, une fréquence de l'ordre de 1 MHz permet d'éviter au signal de modulation d'être affecté par une dispersion chromatique accumulée dans la ligne de transmission optique utilisée pour transmettre le signal optique selon l'invention.

Dans un autre mode de réalisation, l'invention concerne un procédé de transmission d'un signal optique à double polarisation, comprenant les étapes suivantes :

- génération dudit signal optique à double polarisation, ledit signal comprenant au moins un intervalle temporel dédié à une modulation par un signal de modulation, sur au moins un niveau inférieur d'amplitude sensiblement nul et un niveau supérieur d'amplitude dudit signal optique,
- modulation, sur ledit au moins un intervalle temporel, dudit signal optique à double polarisation par ledit signal de modulation, délivrant un signal optique modifié, et
- transmission dudit signal optique modifié dans une ligne de transmission optique.

Ainsi, de manière réciproque au procédé de détermination d'un rapport signal à bruit optique selon l'invention, le procédé de transmission met en oeuvre une modulation sur au moins deux niveaux d'amplitude du signal optique par un signal de modulation.

Réciproquement, le procédé de transmission d'un signal optique à double polarisation selon l'invention est également mis en oeuvre selon les différentes variantes de réalisation du procédé de détermination d'un rapport signal à bruit optique précédemment décrit.

Plus précisément, selon un exemple, le signal de modulation est un signal représenté par une fonction à créneaux présentant au moins deux niveaux d'amplitude.

Parmi, les fonction à créneaux, la fonction « porte » périodique et présentant deux niveaux d'amplitude est par exemple utilisée selon l'invention. Les signaux présentant ce type de fonction « porte » sont par exemple des signaux NRZ-OOK délivrée par un modulateur Mach-Zehnder (MZM) ou un modulateur acousto-optique (AOM) dont la réponse est indépendante de la polarisation des signaux entrants.

Par ailleurs, la fréquence du signal de modulation utilisé en transmission est par exemple de l'ordre de 1 MHz.

En effet, au regard des systèmes de transmission WDM à 40 Gbps et 100 Gbps, une fréquence de l'ordre de 1 MHz permet d'éviter au signal de modulation d'être affecté par une dispersion chromatique accumulée dans la ligne de transmission optique utilisée pour transmettre, par exemple, un signal optique à double polarisation selon l'invention.

Pour d'autres valeurs de débit de systèmes de transmission, il est donc préférable d'utiliser un signal de modulation de fréquence très faible au regard du débit optique de transmission, cette fréquence étant par exemple au moins quarante mille fois plus faible que la valeur de débit utilisé.

La durée de l'intervalle temporel généré par le procédé de transmission selon l'invention est par exemple au moins égale à cinq cent microsecondes. En outre, cet intervalle temporel est par exemple localisé temporellement toutes les cinq à quinze minutes au sein du signal optique.

L'invention concerne également un signal optique à double polarisation comprenant au moins un intervalle temporel dédié à une modulation sur au moins un niveau inférieur d'amplitude sensiblement nul et un niveau supérieur d'amplitude du signal optique par un signal de modulation.

Selon un aspect particulier de ce signal ledit au moins un intervalle temporel comprend au moins trois zones temporelles successives et distinctes :

- une première zone temporelle comprenant une information signalant la fin de transmission d'une partie de données utiles localisée dans ledit signal optique avant ledit intervalle temporel, ladite première zone permettant une synchronisation d'un dispositif de réception sur un mode de synchronisation interne audit dispositif de réception,
- une deuxième zone temporelle sur laquelle ledit signal optique est modulé par un signal de modulation sur lesdits niveaux d'amplitude,
- une troisième zone temporelle comprenant une information d'apprentissage permettant un changement de mode de synchronisation dudit dispositif de réception afin de passer dudit mode de synchronisation interne vers un mode de synchronisation associée à une partie de données utiles localisée dans ledit signal optique après ledit intervalle temporel.

Par exemple, pour un intervalle de durée au moins égale à cinq cent microsecondes vingt-cinq pourcent de cette durée correspondent à la première zone temporelle, cinquante pourcent correspondent à la deuxième zone temporelle et les derniers vingt-cinq pourcent correspondent à la troisième zone temporelle.

L'invention concerne également un procédé de réception d'un signal optique à double polarisation, comprenant les étapes suivantes :

- réception dudit signal optique à double polarisation, et
- détermination d'un rapport signal à bruit optique dudit signal optique à double polarisation reçu tel que décrit précédemment.

Le procédé de réception d'un signal optique selon l'invention est également mis en oeuvre selon les différentes variantes de réalisation du procédé de détermination d'un rapport signal à bruit optique précédemment décrit.

Selon un aspect particulier du procédé de réception selon l'invention, le procédé de réception comprend une étape de localisation d'un intervalle temporel dédié à une modulation sur au moins un niveau inférieur d'amplitude sensiblement nul et un niveau supérieur d'amplitude dudit signal optique à par un signal de modulation, ledit intervalle temporel comprenant au moins trois zones temporelles successives et distinctes.

En outre, ledit procédé de réception comprend les étapes successives suivantes, mises en oeuvre par un dispositif de réception:

- sur une première zone temporelle dudit intervalle temporel, première synchronisation dudit dispositif de réception sur un mode de synchronisation interne audit dispositif de réception,
- sur une deuxième zone temporelle dudit intervalle temporel, lesdites étapes de détection et de détermination dudit rapport signal à bruit optique,
- sur une troisième zone temporelle dudit intervalle temporel, deuxième synchronisation dudit dispositif de réception en utilisant un mode de synchronisation associé à une partie de données utiles localisée dans ledit signal optique reçu après ledit intervalle temporel.

Ainsi, le procédé de réception gère la présence d'un intervalle temporel dépourvu de données utiles en adaptant le mode de synchronisation de réception.

Dans encore un autre mode de réalisation, l'invention concerne un ou plusieurs programmes d'ordinateur comportant des instructions pour la mise en oeuvre du procédé de détermination d'un rapport signal à bruit optique et/ou des instructions pour la mise en oeuvre du procédé de transmission, et/ou des instructions pour la mise en oeuvre du procédé de réception tels que décrits ci-dessus, lorsque ce ou ces programmes sont exécutés par un processeur.

Les procédés selon l'invention peuvent donc être mis en oeuvre de diverses manières, notamment sous forme câblée ou sous forme logicielle.

L'invention concerne aussi un support d'informations lisible par un ordinateur, et comportant des instructions d'un programme d'ordinateur tel que mentionné ci-dessus.

Dans un autre mode de réalisation, l'invention concerne un module de détermination d'un rapport signal à bruit optique d'un signal optique à double polarisation. Selon l'invention, un tel module comprend :

- un détecteur, détectant dans ledit signal optique à double polarisation, un signal de modulation modulant ledit signal optique à double polarisation, sur au moins un niveau inférieur d'amplitude sensiblement nul et un niveau supérieur d'amplitude,
- une unité de détermination dudit rapport signal à bruit optique à partir d'une mesure de puissance dudit signal de modulation.

Un tel module de détermination d'un rapport signal à bruit optique est notamment adapté à mettre en oeuvre le procédé de module de détermination d'un rapport signal à bruit optique décrit précédemment. Il est par exemple connectable/déconnectable d'un dispositif de réception de signal optique.

Ce module de détermination d'un rapport signal à bruit optique pourra bien sûr comporter les différentes caractéristiques relatives au procédé de module de détermination d'un rapport signal à bruit optique décrit précédemment, qui peuvent être combinées ou prises isolément. Ainsi, les caractéristiques et avantages de ce module sont les mêmes que ceux du procédé de détermination d'un rapport signal à bruit optique. Par conséquent, ils ne sont pas détaillés plus amplement.

Avantageusement, un tel module de détermination du rapport signal à bruit optique est compatible pour déterminer un rapport signal à bruit optique d'un signal optique à simple polarisation, à bipolarisation ou encore à d'autre type de polarisation multiple

Dans un autre mode de réalisation, l'invention concerne un dispositif de transmission d'un signal optique à double polarisation. Selon l'invention, un tel dispositif comprend :

- un générateur dudit signal optique à double polarisation, ledit signal optique à double polarisation comprenant au moins un intervalle temporel dédié à une modulation sur au moins un niveau inférieur d'amplitude sensiblement nul et un niveau supérieur d'amplitude dudit signal optique à double polarisation par un signal de modulation
- un modulateur, durant ledit au moins intervalle temporel, dudit signal optique par ledit signal de modulation, délivrant un signal optique modifié,
- une unité de transmission dudit signal optique modifié dans une ligne de transmission optique.

Un tel dispositif de transmission est notamment adapté à mettre en oeuvre le procédé de transmission décrit précédemment. Ce dispositif de transmission pourra bien sûr comporter les différentes caractéristiques relatives au procédé de transmission décrit précédemment, qui peuvent être combinées ou prises isolément. Ainsi, les caractéristiques et avantages de ce dispositif de transmission sont les mêmes que ceux du procédé de transmission. Par conséquent, ils ne sont pas détaillés plus amplement.

Dans un autre mode de réalisation, l'invention concerne un dispositif de réception d'un signal optique à double polarisation. Selon l'invention, un tel dispositif comprend :

- une unité de réception dudit signal optique à double polarisation,
- un module de détermination d'un rapport signal à bruit optique dudit signal optique à double polarisation reçu décrit précédemment.

Un tel dispositif de réception est notamment adapté à mettre en oeuvre le procédé de réception décrit précédemment. Ce dispositif de réception pourra bien sûr comporter les différentes caractéristiques relatives au procédé de réception décrit précédemment, qui peuvent être combinées ou prises isolément. Ainsi, les caractéristiques et avantages de ce dispositif de réception sont les mêmes que ceux du procédé de réception. Par conséquent, ils ne sont pas détaillés plus amplement.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1, présente les principales étapes mises en oeuvre par un procédé de détermination d'un rapport signal à bruit optique selon un mode de réalisation de l'invention ;
- la figure 2 présente les étapes mises en oeuvre par l'étape de détermination d'un rapport signal à bruit optique selon des variantes de réalisation de l'invention ;
- la figure 3 présente les principales étapes mises en oeuvre par un procédé de transmission selon un mode de réalisation de l'invention ;
- la figure 4 illustre la structure d'un signal optique obtenu en mettant en oeuvre les étapes de la figure 3 ;
- la figure 5 présente les principales étapes mises en oeuvre par un procédé de réception selon un mode de réalisation de l'invention ;
- les figures 6 à 8 illustrent respectivement la structure simplifiée d'un module de détermination d'un rapport signal à bruit optique, la structure simplifiée d'un dispositif de transmission et la structure simplifiée d'un dispositif de réception selon un mode de réalisation particulier de l'invention ; et
- la figure 9 représente un système optique comprenant un module de détermination d'un rapport signal à bruit optique, un dispositif de transmission et un dispositif de réception selon un mode de réalisation particulier de l'invention.

## 5. Description d'un mode de réalisation de l'invention

### 5.1 Principe général

Le principe général de l'invention repose sur la mise en oeuvre d'un signal de modulation, modulant sur au moins un niveau inférieur d'amplitude sensiblement nul et un niveau supérieur d'amplitude un signal optique. Un tel signal de modulation est facilement détectable après transmission dans une ligne de transmission optique.

Après détection, il est possible de mettre en oeuvre une mesure de puissance peu complexe à partir de ce signal de modulation, ce signal de modulation étant affecté du même bruit introduit au cours de la transmission dans un canal que le signal optique qu'il module.

La technique selon l'invention peut s'appliquer à la mesure de rapport signal à bruit optique en mode intra-bande (en anglais « in-band ») ce qui permet d'éviter de suspendre la transmission en cours sur un canal optique, ou d'éviter l'arrêt de transmissions en cours sur les canaux voisins immédiats du canal observé.

La technique selon l'invention peut également s'appliquer à la mesure de rapport signal à bruit optique en mode hors bande, ce mode étant classiquement moins contraignant à mettre en oeuvre.

L'invention trouve notamment des applications dans les transmissions optiques WDM, notamment pour des signaux WDM à double polarisations utilisés dans les systèmes de transmission WDM en service (qui acheminent des flux de données commerciaux).

Elle est également particulièrement performante pour la mesure de l'OSNR des systèmes de transmission WDM de nouvelle génération à 100 Gbps utilisant une modulation optique de phase en quadrature (QPSK de l'anglais « quadrature phase shift keying ») à double polarisation.

Toutefois, l'invention ne se limite pas aux signaux optiques à double polarisation, et offre également une alternative aux techniques de mesure de rapport signal à bruit optique de signaux à simple polarisation.

Ainsi, la technique selon l'invention est compatible avec différent type de polarisation de signaux optiques. Les modules mettant en oeuvre la technique selon l'invention sont en conséquence extrêmement intéressants du fait de leur capacité à délivrer l'OSNR pour différents types de signaux optiques. De tels modules évitent donc l'achat de deux modules distincts l'un étant dédié aux signaux optiques à simple polarisation et l'autre aux signaux optiques à double polarisation.

Par la suite, il est à noter que les détails d'implémentation de l'invention sont présentés au regard d'un exemple basé sur un signal optique à double polarisation. Cependant, la technique selon l'invention peut être dérivée directement et sans ambiguïté pour des signaux optiques à simple polarisation ou encore à tout autre type de polarisation multiple.

### 5.2 Description d'un mode de réalisation particulier du procédé de détermination d'un rapport signal à bruit optique selon l'invention

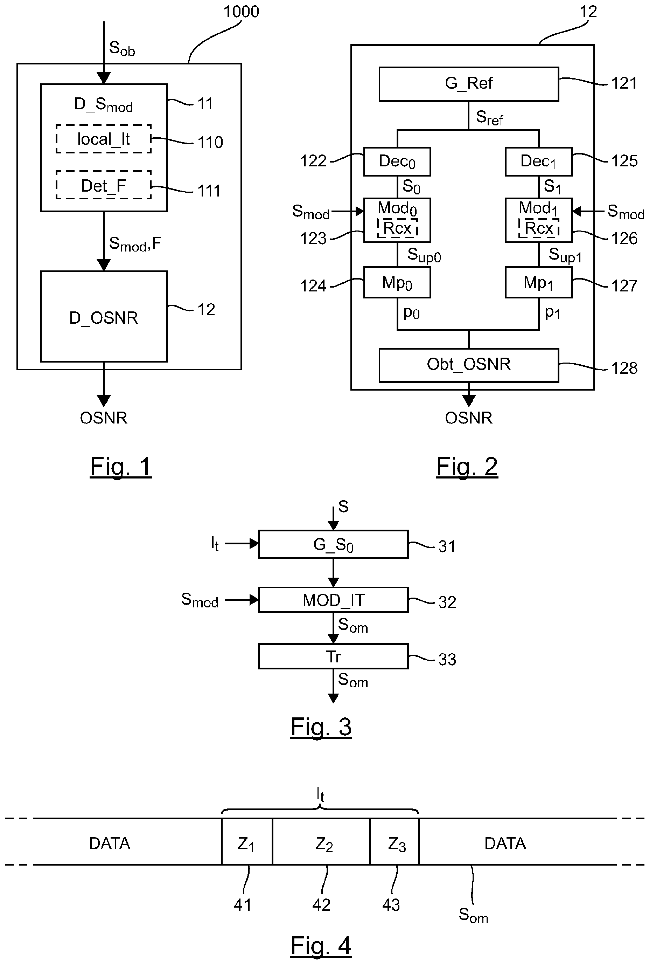

On présente désormais, en relation avec la figure 1 les principales étapes mises en oeuvre par le procédé de détermination d'un rapport signal à bruit optique selon l'invention.

Un tel procédé de détermination (1000) d'un rapport signal à bruit optique comprend une étape de détection D_$S_{mod}$ (11), dans un signal optique à double polarisation $S_{ob}$, d'un signal de modulation $S_{mod}$ modulant, sur au moins deux niveaux d'amplitude (un niveau inférieur d'amplitude, sensiblement nul, et un niveau supérieur d'amplitude distinct du niveau inférieur d'amplitude), le signal optique à double polarisation, et une étape de détermination (12) du rapport signal à bruit optique à partir d'une mesure de puissance dudit signal de modulation.

Le signal optique à double polarisation $S_{ob}$ est notamment affecté du bruit de transmission optique.

Plus précisément, selon un mode de réalisation particulier, l'étape de détection (11) comprend une étape de localisation local_It (110) d'un intervalle temporel (It) dédié à la modulation sur au moins deux niveaux d'amplitude du signal optique à double polarisation par le signal de modulation $S_{mod}$ et une étape de détection Det_F (111) d'une fréquence F du signal de modulation $S_{mod}$.

Comme illustré en figure 2, l'étape de détermination 12 du rapport signal à bruit optique met en oeuvre les sous-étapes suivantes :

- génération G_Ref (121) d'un signal de référence $S_{ref}$, présentant au moins un niveau inférieur d'amplitude sensiblement nul et un niveau supérieur d'amplitude, et dont la fréquence est égale à la fréquence F détectée,
- décalage temporel $Dec_0$ (122) dudit signal de référence par rapport audit signal de modulation de sorte qu'un niveau supérieur d'amplitude dudit signal de référence soit synchronisé avec un niveau inférieur dudit signal de modulation, délivrant un signal de référence inférieur,
- modulation $Mod_0$ (123) dudit signal de modulation au moyen dudit signal de référence inférieur, délivrant un premier signal superposé $S_{upO}$ associé au niveau inférieur dudit signal de modulation,
- mesure de puissance $Mp_0$ (124) dudit premier signal superposé $S_{up0}$, délivrant une première puissance $P_0$,
- décalage temporel $Dec_1$ (125) dudit signal de référence par rapport audit signal de modulation de sorte qu'un niveau supérieur d'amplitude dudit signal de référence soit synchronisé avec un niveau supérieur dudit signal de modulation, délivrant un signal de référence supérieur,
- modulation $Mod_1$ (126) dudit signal de modulation au moyen dudit signal de référence supérieur, délivrant un deuxième signal superposé $S_{up1}$ associé au niveau supérieur dudit signal de modulation,
- mesure de puissance $Mp_1$ (127) dudit deuxième signal superposé $S_{up1}$, délivrant une deuxième puissance $P_1$,
- obtention (128) dudit rapport signal à bruit optique OSNR à partir desdites première et deuxième puissances $P_0$ et $P_1$.

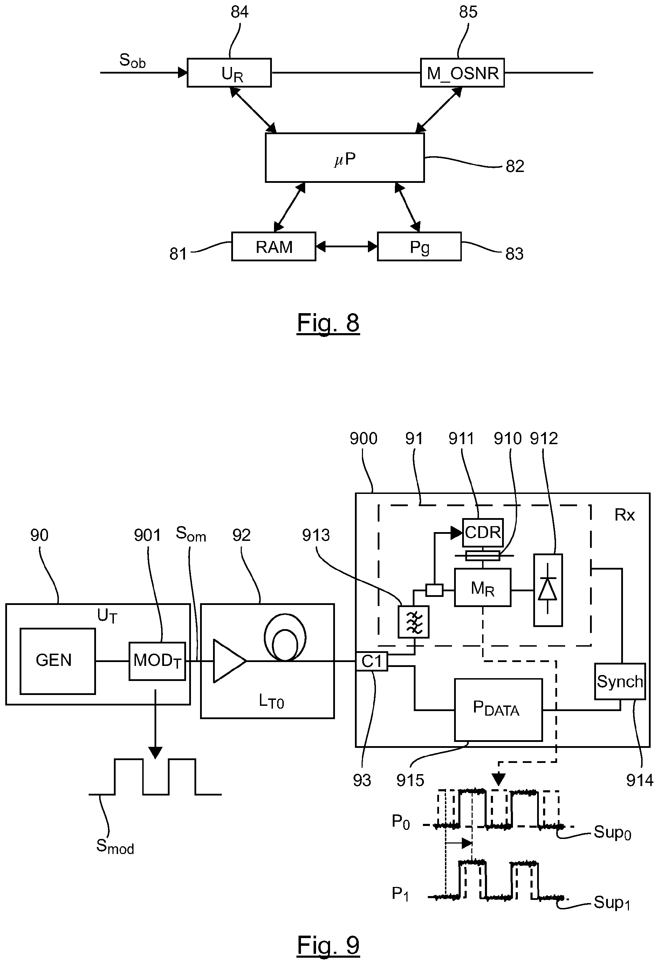

La figure 9 illustre un exemple d'implémentation d'un système optique selon l'invention.

Selon cet exemple, le procédé de détermination d'un rapport signal à bruit OSNR est mis en oeuvre par un module de détermination d'OSNR 91. Selon cet exemple de la figure 9, le signal de modulation $S_{mod}$ est un signal de modulation NRZ-OOK parfaitement périodique (01010101010 ...).

L'étape Det_F de détection d'une fréquence du signal de modulation $S_{mod}$ correspond par exemple à une récupération/génération d'horloge CDR 911 le signal d'horloge étant également appelé signal de référence $S_{ref}$ dont la fréquence est avantageusement de l'ordre de 1 MHz, le signal de modulation ayant été sélectionné de sorte à être robuste à la dispersion chromatique accumulée dans la ligne de transmission optique $L_{TO}$ (92). Un tel module de détection de fréquence et de génération d'horloge CDR 911 reçoit en entrée le signal optique $S_{ob}$ et génère en sortie le signal horloge également appelé $S_{ref}$. Ce signal est un signal radiofréquence dépourvu de composante optique.

Les étapes de décalage temporel $Dec_0$ et $Dec_1$ sont mises en oeuvre par un déphaseur 910 du module de détermination d'OSNR. Un tel déphaseur 910 est donc disposé sur le trajet de l'horloge récupérée.

Ce signal de référence $S_{ref}$ correspondant à une horloge, après avoir été amplifiée et décalée, va attaquer un modulateur $M_R$ de type Mach-Zehnder (MZM) ou un modulateur acousto-optique (AOM) dont la réponse ne dépend pas de la polarisation des signaux entrants.

Grâce au déphaseur 910, le signal périodique 01010101010... récupéré au niveau du récepteur est synchronisé successivement sur les « 1 » et les « 0 » du signal $S_{mod}$ NRZ-OOK généré au niveau de l'émetteur et qui a traversé la ligne de transmission $L_{TO}$ (92).

Grâce à une mesure de puissance ($Mp_0$, $Mp_1$), on détermine successivement la puissance $P_1$ et $P_0$ contenue respectivement dans les « 1 » et les « 0 » du signal NRZ-OOK généré au niveau de l'émetteur après que celui-ci se soit propagé sur la ligne de transmission et ait été affecté par le bruit d'ASE.

Le rapport de cycle $R_{CY}$ (« duty cycle » en anglais) du modulateur MZM/AOM est optionnellement deux fois plus petit que celui utilisé côté émetteur.

Ainsi, lorsque le rapport de cycle $R_{CY}$ est de ½ (il y a autant de « 1 » que de « 0 » dans la séquence périodique de données 01010101010 ...), il sera égal à ¼ pour le modulateur du module de détermination de l'OSNR si bien que la durée des « 0 » est deux fois plus longue que la durée des « 1 ».

La mesure de puissance ($Mp_0$, $Mp_1$) effectuée au moyen d'un dispositif de mesure de puissance 912 délivrance une puissance moyenne des signaux premier et deuxième signaux superposé $S_{up0}$ et $S_{up1}$, est selon l'exemple de la figure 9 réalisée sur la branche d'un coupleur optique C1 93 destiné à la surveillance du système optique (localisé après passage dans la ligne de transmission optique). Cette mesure est donc non destructive pour le flux de données commercial porté par exemple par un canal WDM mesuré. A noter enfin que le canal à mesurer est sélectionné au moyen d'un filtre optique 913 embarqué dans le module de détermination d'OSNR.

La puissance mesurée dans les « 1 » de la séquence périodique du signal 01010101010... intègre la puissance du signal et celle du bruit d'ASE, alors que la puissance mesurée dans les « 0 » n'intègre que la puissance du bruit d'ASE accumulée dans la ligne de transmission $L_{TO}$ (92). Ainsi une fois la puissance $P_1$ mesurée dans les « 1 » et la puissance $P_0$ mesurée dans les « 0 » obtenues, l'OSNR, par exemple en mode intra-band s'obtient grâce à la relation suivante :

$$OSNR = \frac{P_S}{P_{ASE}} = \frac{P_1 - P_0}{P_0}$$

### 5.3 Description d'un mode de réalisation particulier du procédé de transmission selon l'invention

On présente désormais, en relation avec la figure 3 les principales étapes mises en oeuvre par le procédé de transmission selon l'invention.

Un tel procédé de transmission d'un signal optique à double polarisation comprend une étape de génération G_So (31) du signal optique à double polarisation, le signal optique à double polarisation comprenant au moins un intervalle temporel It dédié à une modulation sur au moins un niveau inférieur d'amplitude sensiblement nul et un niveau supérieur d'amplitude du signal optique à double polarisation par un signal de modulation $S_{mod}$,

En d'autres termes, un léger « sur-débit » est appliqué à un signal optique S que l'on souhaite par la suite mesurer. Par exemple, 1 ms ou 500 µs sont réservés pour formé un intervalle temporel dédié et ce par exemple toutes les 5 ou 15 minutes.

Puis, sur l'intervalle temporel It, une modulation (32) du signal optique S par le signal de modulation $S_{mod}$, est effectuée et délivre un signal optique modifié $S_{om}$. Transmis Tr (33) dans la ligne de transmission optique $L_{TO}$ (92).

Au regard de la figure 9, illustrant un exemple d'implémentation d'un système optique selon l'invention, le signal de modulation $S_{mod}$ utilisé par le dispositif de transmission 90 selon l'invention est un signal de modulation NRZ-OOK. Un tel signal de modulation $S_{mod}$ module, ou « sur-module » un signal optique à double polarisation S, par exemple un signal optique QPSK à 100 Gbps.

Le modulateur $MOD_T$ est par exemple de type Mach-Zehnder (MZM) avec un taux d'extinction de 20 dB localisé à la sortie de l'émetteur, ou de manière préférentielle, un modulateur acousto-optique (AOM) dont le taux d'extinction peut atteindre 100 dB.

Un tel modulateur MZM/AOM est par exemple intégré dans une interface WDM à 100 Gbps d'un équipement de transmission WDM.

Préférentiellement, cette sur-modulation NRZ-OOK fonctionne à une fréquence très faible de l'ordre du MHz et est parfaitement périodique (01010101010 ...).

Le choix de la fréquence est dépendant de la dispersion chromatique accumulée dans le lien de transmission optique $L_{TO}$ (92). Une fréquence faible permet que la séquence périodique du signal de modulation $S_{mod}$ (01010101010 ...) ne soit pas affectée par la dispersion chromatique accumulée dans le lien optique à mesurer par détermination de l'OSNR correspondant. Une fréquence de 1 MHz par exemple assure une immunité à la dispersion chromatique dans la plupart des cas de figure.

### 5.4 Description d'un mode de réalisation particulier du procédé de réception selon l'invention

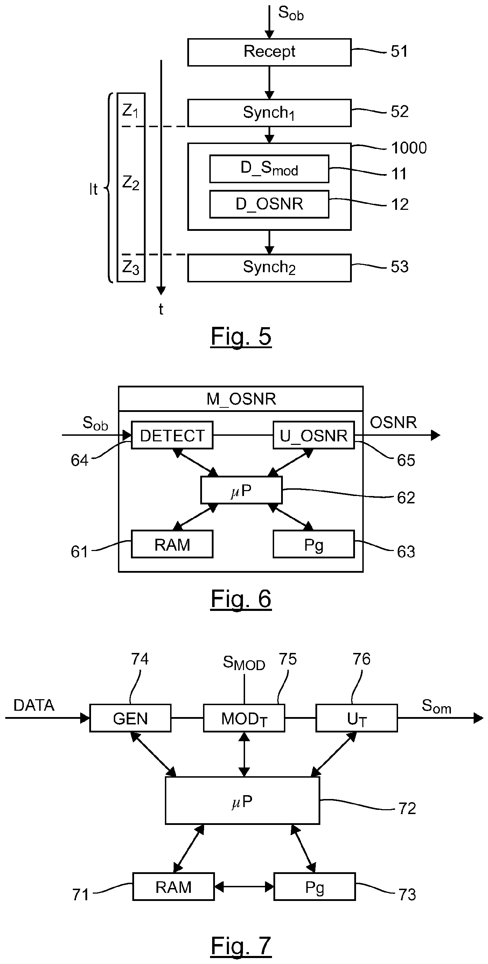

On présente désormais, en relation avec la figure 5 les principales étapes mises en oeuvre par le procédé de réception selon l'invention. Un tel procédé de réception comprend une étape de réception (51) d'un signal optique à double polarisation Sob. Ce signal optique est notamment affecté par un bruit relatif à ligne de transmission optique utilisée ou au canal optique ce cette ligne de transmission optique.

En outre, le procédé de réception selon l'invention comprend une étape de détermination (1000) d'un rapport signal à bruit optique dudit signal optique à double polarisation reçu selon le procédé de détermination d'OSNR décrit précédemment.

Plus précisément, le procédé de réception selon l'invention comprend une étape de localisation d'un intervalle temporel It dédié à une modulation sur au moins un niveau inférieur d'amplitude sensiblement nul et un niveau supérieur d'amplitude dudit signal optique à double polarisation par un signal de modulation.

Cette étape de localisation (non représentée) est par exemple commune au procédé de détermination d'OSNR précédemment décrit ou distincte.

En particulier, comme représenté en relation avec la figure 4 illustrant le signal optique à double polarisation selon l'invention, l'intervalle temporel comprenant au moins trois zones temporelles ($Z_1$, $Z_2$, $Z_3$) successives et distinctes.

Au regard de ces trois zones temporelles distinctes, le procédé de réception comprend les étapes successives suivantes, mises en oeuvre par un dispositif de réception:

- sur une première zone temporelle ($Z_1$) de l'intervalle temporel, première synchronisation (52) du dispositif de réception sur un mode de synchronisation interne audit dispositif de réception,
- sur une deuxième zone temporelle ($Z_2$) de l'intervalle temporel, lesdites étapes de détection et de détermination dudit rapport signal à bruit optique,
- sur une troisième zone temporelle ($Z_3$) de l'intervalle temporel, deuxième synchronisation (53) du dispositif de réception en utilisant un mode de synchronisation associé à une partie de données utiles localisée dans ledit signal optique reçu après ledit intervalle temporel.

Au regard de la figure 9, illustrant un exemple d'implémentation d'un système optique selon l'invention, le dispositif de réception selon l'invention comprend donc un module de synchronisation 914 mettant en oeuvre les première et deuxième étapes de synchronisation afin de séparer temporellement la mise en oeuvre de la détermination d'OSNR selon l'invention du traitement $P_{DATA}$ 915 des données utiles.

### 5.5 Description d'un signal optique à double polarisation selon l'invention

La figure 4 illustre la structure d'un signal optique obtenu en mettant en oeuvre les étapes de la figure 3.
Plus précisément, le signal optique à double polarisation comprend au moins un intervalle It temporel dédié à une modulation sur au moins un niveau inférieur d'amplitude sensiblement nul et un niveau supérieur d'amplitude dudit signal optique à double polarisation par un signal de modulation.
Selon un mode de réalisation particulier illustré par la figure 4, l'intervalle temporel It comprend au moins trois zones temporelles successives et distinctes :

- une première zone temporelle $Z_1$ (41) comprenant une information signalant la fin de transmission d'une partie de données utiles localisée dans ledit signal optique avant ledit intervalle temporel, ladite première zone permettant une synchronisation d'un dispositif de réception sur un mode de synchronisation interne audit dispositif de réception,
- une deuxième zone temporelle $Z_2$ (42) sur laquelle ledit signal optique à double polarisation est modulé par un signal de modulation sur au moins un niveau inférieur d'amplitude sensiblement nul et un niveau supérieur d'amplitude,
- une troisième zone temporelle $Z_3$ (43) comprenant une information d'apprentissage permettant un changement de mode de synchronisation dudit dispositif de réception afin de passer dudit mode de synchronisation interne vers un mode de synchronisation associée à une partie de données utiles localisée dans ledit signal optique après ledit intervalle temporel.

Par exemple dans le cas d'une transmission optique d'un dispositif de transmission DP-QPSK vers un dispositif de réception DP-QPSK, la structure du signal correspond à une structure multi-trame telle que représentée sur la figure 4 et comportant un long créneau ou intervalle temporel de débit utile contenant des données DATA d'une durée de 5 voire 15 minutes, suivi d'un intervalle temporel It court d'1 ms ou 500 µs par exemple pendant une partie duquel le modulateur AOM/MZM fonctionne et ainsi de suite.

Cet intervalle temporel court est composé de 3 zones:

- Zone 1 $Z_1$ : comprenant un signal d'avertissement pour que le dispositif de réception DP-QPSK se prépare à recevoir la perte de signal optique due au «0» de la séquence périodique du signal 01010101010 susmentionné, lorsque le signal de modulation $S_{mod}$ est un signal de modulation NRZ-OOK parfaitement périodique (01010101010 ...) et que le dispositif de réception reste malgré tout synchronisé en mode dit mode « hold-over » en utilisant par exemple une synchronisation interne présente dans le dispositif de réception DP-QPSK,
- Zone 2 $Z_2$ : comprenant le signal de modulation $S_{mod}$ utilisé par le module de détermination de l'OSNR précédemment décrit, par exemple, une séquence binaire pseudo-aléatoire (PRBS) dans des trames de réseau de transport optique (OTN de l'anglais « Optical Transport Network ») modulées en DP-QPSK puis surmodulée par le modulateur AOM/MZM avec la séquence périodique du signal de modulation $S_{mod}$ 01010101010....
- Zone 3 $Z_3$ : comprenant une séquence d'apprentissage afin de préparer le dispositif de réception DP-QPSK à se resynchroniser sur le long intervalle temporel suivant de débit utile et quitter le mode de synchronisation « hold-over » vers le mode de synchronisation sur signal reçu.

Un dispositif de synchronisation Synch 914 tel que représenté sur la figure 9 pilote notamment le module 91 de détermination d'OSNR selon l'invention et en particulier le modulateur AOM/MZM afin que celui-ci n'active son fonctionnement que pendant la Zone 2 de l'intervalle temporel It.

### 5.6 Description du module de détermination d'un rapport signal à bruit optique et des dispositifs de transmission et de réception selon l'invention

On présente finalement, en relation avec les figures 6 à 8 respectivement, la structure simplifiée d'un module de détermination d'un rapport signal à bruit optique mettant en oeuvre un procédé de détermination d'un rapport signal à bruit optique, la structure d'un dispositif de transmission mettant en oeuvre une technique de transmission d'un signal optique et la structure d'un dispositif de réception mettant en oeuvre une technique de réception selon un mode de réalisation particulier de l'invention.
Comme illustré en figure 6, un tel module de détermination d'un rapport signal à bruit optique M_OSNR comprend quant à lui une mémoire 61 comprenant une mémoire tampon, une unité de traitement 62, équipée par exemple d'un microprocesseur $\mu P$, et pilotée par le programme d'ordinateur 63, mettant en oeuvre le procédé de détermination d'un rapport signal à bruit optique selon l'invention.

A l'initialisation, les instructions de code du programme d'ordinateur 63 sont par exemple chargées dans une mémoire RAM avant d'être exécutées par le processeur de l'unité de traitement 62. L'unité de traitement 62 reçoit en entrée le signal optique $S_{ob}$. Le microprocesseur de l'unité de traitement 62 met en oeuvre les étapes du de détermination d'un rapport signal à bruit optique décrit précédemment, selon les instructions du programme d'ordinateur 63, pour délivrer le rapport signal à bruit optique OSNR du signal optique $S_{ob}$. Pour cela, le dispositif de restitution comprend en outre : un détecteur DETECT 64, détectant dans le signal optique $S_{ob}$, un signal de modulation $S_{mod}$ modulant, sur au moins un niveau inférieur d'amplitude sensiblement nul et un niveau supérieur d'amplitude, ledit signal optique, et une unité de détermination U_OSNR 65 du rapport signal à bruit optique à partir d'une mesure de puissance du signal de modulation.

Ces modules sont pilotés par le microprocesseur de l'unité de traitement 62.

Comme illustré en figure 7, un tel dispositif de transmission d'un signal optique comprend quant à lui une mémoire 71 comprenant une mémoire tampon, une unité de traitement 72, équipée par exemple d'un microprocesseur $\mu P$, et pilotée par le programme d'ordinateur 73, mettant en oeuvre le procédé de transmission d'un signal optique selon l'invention.

A l'initialisation, les instructions de code du programme d'ordinateur 73 sont par exemple chargées dans une mémoire RAM avant d'être exécutées par le processeur de l'unité de traitement 72. L'unité de traitement 72 reçoit en entrée des données DATA à transmettre. Le microprocesseur de l'unité de traitement 72 met en oeuvre les étapes du procédé de transmission décrit précédemment, selon les instructions du programme d'ordinateur 73, pour transmettre un signal optique, et permettre la détermination de son rapport signal à bruit optique. Pour cela, le dispositif de transmission comprend en outre : un générateur GEN 74 du signal optique, le signal optique comprenant au moins un intervalle temporel It dédié à une modulation sur au moins un niveau inférieur d'amplitude sensiblement nul et un niveau supérieur d'amplitude du signal optique par un signal de modulation $S_{mod}$, un modulateur $MOD_T$ 75, durant ledit au moins intervalle temporel It, du signal optique par le signal de modulation, délivrant un signal optique modifié $S_{om}$, une unité de transmission $U_T$ 76 du signal optique modifié dans une ligne de transmission optique.

Ces modules sont pilotés par le microprocesseur de l'unité de traitement 72.

Comme illustré en figure 8, un tel dispositif de réception comprend une mémoire 81 comprenant une mémoire tampon, une unité de traitement 82, équipée par exemple d'un microprocesseur $\mu P$ et pilotée par le programme d'ordinateur 83, mettant en oeuvre le procédé de réception selon l'invention.

A l'initialisation, les instructions de code du programme d'ordinateur 83 sont par exemple chargées dans une mémoire RAM avant d'être exécutées par le processeur de l'unité de traitement 82. L'unité de traitement 82 reçoit en entrée un signal optique $S_{ob}$. Le microprocesseur de l'unité de traitement 82 met en oeuvre les étapes du procédé de réception décrit précédemment, selon les instructions du programme d'ordinateur 83. Pour cela, le dispositif de transmission comprend en outre : une unité de réception $U_R$ 84 du signal optique $S_{ob}$, un module de détermination d'un rapport signal à bruit optique M_OSNR tel que représenté sur la figure 6.

Ces modules sont pilotés par le microprocesseur de l'unité de traitement 82.

## Revendications

1. Procédé de détermination (1000) d'un rapport signal à bruit optique d'un signal optique à double polarisation comprenant au moins un intervalle de temps dédié à une modulation, sur au moins un niveau inférieur d'amplitude sensiblement nul et un niveau supérieur d'amplitude, dudit signal optique à double polarisation par un signal de modulation, comprenant les étapes suivantes :

   - détection (11), dans ledit signal optique à double polarisation, du signal de modulation modulant ledit signal optique à double polarisation sur au moins un niveau inférieur d'amplitude sensiblement nul et un niveau supérieur d'amplitude, et

   - détermination (12) dudit rapport signal à bruit optique à partir d'une mesure de puissance dudit signal de modulation,

   - le procédé étant **caractérisé en ce que** ledit au moins un intervalle temporel comprend au moins trois zones temporelles successives et distinctes:

      ○ une première zone temporelle (41) comprenant une information signalant la fin de transmission d'une partie de données utiles localisée dans ledit signal optique avant ledit intervalle temporel, ladite première zone permettant une synchronisation d'un dispositif de réception sur un mode de synchronisation interne audit dispositif de réception,
      ○ une deuxième zone temporelle (42) sur laquelle ledit signal optique est modulé par ledit signal de modulation sur lesdits niveaux d'amplitude,
      ○ une troisième zone temporelle (43) comprenant une information d'apprentissage permettant un changement de mode de synchronisation dudit dispositif de réception afin de passer dudit mode de synchronisation interne vers un mode de synchronisation associée à une partie de données utiles localisée dans ledit signal optique après ledit intervalle temporel,

**2.** Procédé de détermination d'un rapport signal à bruit optique selon la revendication 1, **caractérisé en ce que** ladite étape de détection comprend une étape de localisation (110) d'un intervalle temporel (It) dédié à une modulation sur lesdits niveaux d'amplitude dudit signal optique par ledit signal de modulation.

**3.** Procédé de détermination d'un rapport signal à bruit optique selon la revendication 2, **caractérisé en ce que** lesdites étapes de détection dudit signal de modulation et de détermination dudit rapport signal à bruit optique sont mises en oeuvre sur une zone temporelle médiane, dite deuxième zone temporelle $Z_2$ (42), dudit intervalle temporel.

**4.** Procédé de détermination d'un rapport signal à bruit optique selon l'une des revendications 1 à 3, **caractérisé en ce que** ladite étape de détection comprend une étape de détection d'une fréquence (111) dudit signal de modulation, et **en ce que** ladite étape de détermination dudit rapport signal à bruit optique comprend les étapes suivantes :

- génération (121) d'un signal de référence, présentant au moins un niveau inférieur d'amplitude sensiblement nul et un niveau supérieur d'amplitude, et dont la fréquence est égale à ladite fréquence détectée,
- décalage temporel (122) dudit signal de référence par rapport audit signal de modulation, de sorte que le niveau supérieur d'amplitude dudit signal de référence soit synchronisé avec le niveau inférieur dudit signal de modulation, délivrant un signal de référence inférieur,
- modulation (123) dudit signal de modulation au moyen dudit signal de référence inférieur, délivrant un premier signal superposé associé au niveau inférieur dudit signal de modulation,
- mesure de puissance (124) dudit premier signal superposé, délivrant une première puissance $P_0$,
- décalage temporel (125) dudit signal de référence par rapport audit signal de modulation, de sorte que le niveau supérieur d'amplitude dudit signal de référence soit synchronisé avec le niveau supérieur dudit signal de modulation, délivrant un signal de référence supérieur,
- modulation (126) dudit signal de modulation au moyen dudit signal de référence supérieur, délivrant un deuxième signal superposé associé au niveau supérieur dudit signal de modulation,
- mesure de puissance (127) dudit deuxième signal superposé, délivrant une deuxième puissance $P_1$,

- obtention (128) dudit rapport signal à bruit optique à partir desdites première et deuxième puissances $P_0$ et $P_1$.

**5.** Procédé de détermination d'un rapport signal à bruit optique selon la revendication 4, **caractérisé en ce que** lesdites étapes de modulation mettent en oeuvre une modification du rapport de cycle (Rcy) dudit signal de référence de sorte qu'il soit deux fois plus petit que celui dudit signal de modulation.

**6.** Procédé de détermination d'un rapport signal à bruit optique selon la revendication 4 ou 5, **caractérisé en ce que** ladite fréquence détectée du signal de modulation est de l'ordre de 1 MHz.

**7.** Procédé de transmission d'un signal optique à double polarisation, **caractérisé en ce qu'**il comprend les étapes suivantes :

- génération (31) dudit signal optique à double polarisation, ledit signal optique comprenant au moins un intervalle temporel dédié à une modulation par un signal de modulation, sur au moins un niveau inférieur d'amplitude sensiblement nul et un niveau supérieur d'amplitude, dudit signal optique, ledit au moins un intervalle temporel comprenant au moins trois zones temporelles successives et distinctes:

une première zone temporelle (41) comprenant une information signalant la fin de transmission d'une partie de données utiles localisée dans ledit signal optique avant ledit intervalle temporel, ladite première zone permettant une synchronisation d'un dispositif de réception sur un mode de synchronisation interne audit dispositif de réception, une deuxième zone temporelle (42) sur laquelle ledit signal optique est modulé par ledit signal de modulation sur lesdits niveaux d'amplitude, une troisième zone temporelle (43) comprenant une information d'apprentissage permettant un changement de mode de synchronisation dudit dispositif de réception afin de passer dudit mode de synchronisation interne vers un mode de synchronisation associée à une partie de données utiles localisée dans ledit signal optique après ledit intervalle temporel,

- modulation (32), sur ledit au moins un intervalle temporel, dudit signal optique à double polarisation par ledit signal de modulation, délivrant un signal optique modifié, et
- transmission (33) dudit signal optique modifié dans une ligne de transmission optique.

**8.** Signal optique à double polarisation, **caractérisé en ce qu'**il comprend au moins un intervalle temporel dédié à une modulation, sur au moins un niveau inférieur d'amplitude sensiblement nul et un niveau supérieur d'amplitude, dudit signal optique par un signal de modulation et **en ce que** ledit au moins un intervalle temporel comprend au moins trois zones temporelles successives et distinctes :

    - une première zone temporelle (41) comprenant une information signalant la fin de transmission d'une partie de données utiles localisée dans ledit signal optique avant ledit intervalle temporel, ladite première zone permettant une synchronisation d'un dispositif de réception sur un mode de synchronisation interne audit dispositif de réception,
    - une deuxième zone temporelle (42) sur laquelle ledit signal optique est modulé par un signal de modulation sur lesdits niveaux d'amplitude,
    - une troisième zone temporelle (43) comprenant une information d'apprentissage permettant un changement de mode de synchronisation dudit dispositif de réception afin de passer dudit mode de synchronisation interne vers un mode de synchronisation associée à une partie de données utiles localisée dans ledit signal optique après ledit intervalle temporel.

**9.** Procédé de réception d'un signal optique à double polarisation, **caractérisé en ce qu'**il comprend les étapes suivantes :

    - réception (51) dudit signal optique à double polarisation, et
    - localisation d'un intervalle temporel dédié à une modulation, sur au moins un niveau inférieur d'amplitude sensiblement nul et un niveau supérieur d'amplitude, dudit signal optique à double polarisation par un signal de modulation, ledit intervalle temporel comprenant au moins trois zones temporelles successives et distinctes,

et **en ce que** ledit procédé de réception comprend les étapes successives suivantes, mises en oeuvre par un dispositif de réception:

    - sur une première zone temporelle (41) dudit intervalle temporel, première synchronisation (52) dudit dispositif de réception sur un mode de synchronisation interne audit dispositif de réception,
    - sur une deuxième zone temporelle (42) dudit intervalle temporel:

        ◦ détection (11), dans ledit signal optique à double polarisation, dudit signal de modulation modulant ledit signal optique à double polarisation, sur lesdits niveaux d'amplitude, et
        ◦ détermination (12) dudit rapport signal à bruit optique à partir d'une mesure de puissance dudit signal de modulation ,

    - sur une troisième zone temporelle (43) dudit intervalle temporel, deuxième synchronisation (53) dudit dispositif de réception en utilisant un mode de synchronisation associé à une partie de données utiles localisée dans ledit signal optique reçu après ledit intervalle temporel.

**10.** Programme d'ordinateur comportant des instructions pour la mise en oeuvre d'un procédé selon l'une des revendications 1, 7 ou 9 lorsque ce programme est exécuté par un processeur.

**11.** Module de détermination d'un rapport signal à bruit optique d'un signal optique à double polarisation comprenant au moins un intervalle de temps dédié à une modulation, le module comprenant :

    - un détecteur, détectant dans ledit signal optique à double polarisation, un signal de modulation modulant ledit signal optique à double polarisation, sur au moins un niveau inférieur d'amplitude sensiblement nul et un niveau supérieur d'amplitude,

    - une unité de détermination dudit rapport signal à bruit optique à partir d'une mesure de puissance dudit signal de modulation,

    - le module est **caractérisé en ce que** ledit au moins un intervalle temporel comprend au moins trois zones temporelles successives et distinctes:

    une première zone temporelle (41) comprenant une information signalant la fin de transmission d'une partie de données utiles localisée dans ledit signal optique avant ledit intervalle temporel, ladite première zone permettant une synchronisation d'un dispositif de réception sur un mode de synchronisation interne audit dispositif de réception, une deuxième zone temporelle (42) sur laquelle ledit signal optique est modulé par ledit signal de modulation sur lesdits niveaux d'amplitude, une troisième zone temporelle (43) comprenant une information d'apprentissage permettant un changement de mode de synchronisation dudit dispositif de réception afin de passer dudit mode de synchronisation interne vers un mode de synchronisation associée à une partie de données utiles localisée dans ledit signal optique après ledit intervalle temporel.

12. Dispositif de transmission d'un signal optique à double polarisation **caractérisé en ce qu'**il comprend :

- un générateur dudit signal optique à double polarisation, ledit signal optique à double polarisation comprenant au moins un intervalle temporel dédié à une modulation, sur au moins un niveau inférieur d'amplitude sensiblement nul et un niveau supérieur d'amplitude, dudit signal optique à double polarisation par un signal de modulation, ledit au moins un intervalle temporel comprenant au moins trois zones temporelles successives et distinctes:

une première zone temporelle (41) comprenant une information signalant la fin de transmission d'une partie de données utiles localisée dans ledit signal optique avant ledit intervalle temporel, ladite première zone permettant une synchronisation d'un dispositif de réception sur un mode de synchronisation interne audit dispositif de réception, une deuxième zone temporelle (42) sur laquelle ledit signal optique est modulé par ledit signal de modulation sur lesdits niveaux d'amplitude,

- une troisième zone temporelle (43) comprenant une information d'apprentissage permettant un changement de mode de synchronisation dudit dispositif de réception afin de passer dudit mode de synchronisation interne vers un mode de synchronisation associée à une partie de données utiles localisée dans ledit signal optique après ledit intervalle temporel
- un modulateur, durant ledit au moins intervalle temporel, dudit signal optique par ledit signal de modulation, délivrant un signal optique modifié,
- une unité de transmission dudit signal optique modifié dans une ligne de transmission optique.

13. Dispositif de réception d'un signal optique à double polarisation, **caractérisé en ce qu'**il comprend :

- une unité de réception dudit signal optique à double polarisation,
- un module de détermination d'un rapport signal à bruit optique dudit signal optique à double polarisation reçu selon la revendication 11.

## Patentansprüche

1. Verfahren zur Bestimmung (1000) eines optischen Signal-Rausch-Verhältnisses eines optischen Dualpolarisationssignals, umfassend mindestens ein Zeitintervall, das einer Modulation auf mindestens einem unteren Amplitudenpegel, der im Wesentlichen Null beträgt, und einem höheren Amplitudenpegel des optischen Dualpolarisationssignals durch ein Modulationssignal gewidmet wird, das die folgenden Schritte aufweist:

- Erfassen (11) in dem optischen Dualpolarisationssignal des Modulationssignals, das das optische Dualpolarisationssignal auf mindestens einem unteren Amplitudenpegel, der im Wesentlichen Null beträgt, und einem höheren Amplitudenpegel moduliert, und
- Bestimmen (12) des optischen Signal-Rausch-Verhältnisses ausgehend von einer Leistungsmessung des Modulationssignals,
- wobei das Verfahren **dadurch gekennzeichnet ist, dass** das mindestens eine Zeitintervall mindestens drei aufeinanderfolgende und getrennte Zeitabschnitte aufweist:

◦ einen ersten Zeitabschnitt (41), umfassend eine Information, die das Ende der Übertragung von einem Teil von nützlichen Daten meldet, der in dem optischen Signal vor dem Zeitintervall lokalisiert wird, wobei der erste Abschnitt eine Synchronisation einer Empfangsvorrichtung auf einem Synchronisationsmodus innerhalb der Empfangsvorrichtung ermöglicht,
◦ einen zweiten Zeitabschnitt (42), auf dem das optische Signal durch das Modulationssignal auf den Amplitudenpegeln moduliert wird,
◦ einen dritten Zeitabschnitt (43), umfassend eine Lerninformation, die ein Ändern des Synchronisationsmodus der Empfangsvorrichtung ermöglicht, um von dem inneren Synchronisationsmodus zu einem Synchronisationsmodus überzugehen, der dem Teil von nützlichen Daten zugeordnet wird, der in dem optischen Signal nach dem Zeitintervall lokalisiert wird.

2. Verfahren zur Bestimmung eines optischen Signal-Rausch-Verhältnisses nach Anspruch 1, **dadurch gekennzeichnet, dass** der Schritt des Erfassens einen Schritt des Lokalisierens (110) eines Zeitintervalls (It) aufweist, das einer Modulation auf den Amplitudenpegeln des optischen Signals durch das Modulationssignal gewidmet wird.

3. Verfahren zur Bestimmung eines optischen Signal-Rausch-Verhältnisses nach Anspruch 2, **dadurch gekennzeichnet, dass** die Schritte des Erfassens des Modulationssignals und des Bestimmens des optischen Signal-Rausch-Verhältnisses auf einem mittleren Zeitabschnitt, dem sogenannten zweiten Zeitabschnitt $Z_2$ (42), des Zeitintervalls umgesetzt werden.

4. Verfahren zur Bestimmung eines optischen Signal-Rausch-Verhältnisses nach einem der Ansprüche 1 bis 3, **dadurch gekennzeichnet, dass** der Schritt des Erfassens einen Schritt des Erfassens einer Frequenz (111) des Modulationssignals aufweist und dass der Schritt des Bestimmens des optischen Signal-Rausch-Verhältnisses die folgenden Schritte aufweist:

   - Erzeugen (121) eines Referenzsignals, das mindestens einen unteren Amplitudenpegel, der im Wesentlichen Null beträgt, und einen höheren Amplitudenpegel aufweist, und dessen Frequenz gleich der erfassten Frequenz ist,
   - zeitliches Verzögern (122) des Referenzsignals gegenüber dem Modulationssignal, derart, dass der höhere Amplitudenpegel des Referenzsignals mit dem unteren Pegel des Modulationssignals synchronisiert wird, wodurch ein unteres Referenzsignal ausgegeben wird,
   - Modulieren (123) des Modulationssignals durch das untere Referenzsignal, wodurch ein erstes überlagertes Signal ausgegeben wird, das dem unteren Pegel des Modulationssignals zugeordnet wird,
   - Leistungsmessen (124) des ersten überlagerten Signals, wodurch eine erste Leistung $P_0$ ausgegeben wird,
   - zeitliches Verzögern (125) des Referenzsignals gegenüber dem Modulationssignal, derart, dass der höhere Amplitudenpegel des Referenzsignals mit dem höheren Pegel des Modulationssignals synchronisiert wird, wodurch ein oberes Referenzsignal ausgegeben wird,
   - Modulieren (126) des Modulationssignals durch das obere Referenzsignal, wodurch ein zweites überlagertes Signal ausgegeben wird, das dem höheren Pegel des Modulationssignals zugeordnet wird,
   - Leistungsmessen (127) des zweiten überlagerten Signals, wodurch eine zweite Leistung $P_1$ ausgegeben wird,
   - Erhalten (128) des optischen Signal-Rausch-Verhältnisses ausgehend von der ersten und zweiten Leistung $P_0$ und $P_1$.

5. Verfahren zur Bestimmung eines optischen Signal-Rausch-Verhältnisses nach Anspruch 4, **dadurch gekennzeichnet, dass** die Schritte des Modulierens ein Modifizieren des Zyklusverhältnisses (Rcy) des Referenzsignals derart umsetzen, dass es zweimal kleiner als jenes des Modulationssignals ist.

6. Verfahren zur Bestimmung eines optischen Signal-Rausch-Verhältnisses nach Anspruch 4 oder 5, **dadurch gekennzeichnet, dass** die erfasste Frequenz des Modulationssignals in der Größenordnung von 1 MHz liegt.

7. Verfahren zum Übertragen eines optischen Dualpolarisationssignals, **dadurch gekennzeichnet, dass** es die folgenden Schritte aufweist:

   - Erzeugen (31) des optischen Dualpolarisationssignals, wobei das optische Signal mindestens ein Zeitintervall aufweist, das einer Modulation durch ein Modulationssignal auf mindestens einem unteren Amplitudenpegel, der im Wesentlichen Null beträgt, und einem höheren Amplitudenpegel des optischen Signals gewidmet wird, wobei das mindestens eine Zeitintervall mindestens drei aufeinander folgende und getrennte Zeitabschnitte aufweist:

      einen ersten Zeitabschnitt (41), umfassend eine Information, die das Ende der Übertragung von einem Teil von nützlichen Daten meldet, der in dem optischen Signal vor dem Zeitintervall lokalisiert wird, wobei der erste Abschnitt eine Synchronisation einer Empfangsvorrichtung auf einem Synchronisationsmodus innerhalb der Empfangsvorrichtung ermöglicht,
      einen zweiten Zeitabschnitt (42), auf dem das optische Signal durch das Modulationssignal auf den Amplitudenpegeln moduliert wird,
      einen dritten Zeitabschnitt (43), umfassend eine Lerninformation, die ein Ändern des Synchronisationsmodus der Empfangsvorrichtung ermöglicht, um von dem inneren Synchronisationsmodus zu einem Synchronisationsmodus überzugehen, der dem Teil von nützlichen Daten zugeordnet wird, der in dem optischen Signal nach dem Zeitintervall lokalisiert wird,

   - Modulieren (32) des optischen Dualpolarisationssignals durch das Modulationssignal auf dem mindestens einen Zeitintervall, wodurch ein modifiziertes optisches Signal ausgegeben wird, und
   - Übertragen (33) des modifizierten optischen Signals in einer optischen Übertragungsleitung.

8. Optisches Dualpolarisationssignal, **dadurch gekennzeichnet, dass** es mindestens ein Zeitintervall aufweist, das einer Modulation des optischen Signals durch ein Modulationssignal auf mindestens einem unteren Amplitudenpegel, der im Wesentlichen Null beträgt, und einem höheren Amplitudenpegel gewidmet ist, und dass das mindestens eine Zeitintervall mindestens drei aufeinanderfolgende und getrennte Zeitabschnitte aufweist:

- einen ersten Zeitabschnitt (41), umfassend eine Information, die das Ende der Übertragung von einem Teil von nützlichen Daten meldet, der in dem optischen Signal vor dem Zeitintervall lokalisiert ist, wobei der erste Abschnitt eine Synchronisation einer Empfangsvorrichtung auf einem Synchronisationsmodus innerhalb der Empfangsvorrichtung ermöglicht,
- einen zweiten Zeitabschnitt (42), auf dem das optische Signal durch ein Modulationssignal auf den Amplitudenpegeln moduliert ist,
- einen dritten Zeitabschnitt (43), umfassend eine Lerninformation, die ein Ändern des Synchronisationsmodus der Empfangsvorrichtung ermöglicht, um von dem inneren Synchronisationsmodus zu einem Synchronisationsmodus überzugehen, der dem Teil von nützlichen Daten zugeordnet ist, der in dem optischen Signal nach dem Zeitintervall lokalisiert ist.

9. Verfahren zum Empfangen eines optischen Dualpolarisationssignals, **dadurch gekennzeichnet, dass** es die folgenden Schritte aufweist:

- Empfangen (51) des optischen Dualpolarisationssignals und
- Lokalisieren eines Zeitintervalls, das einer Modulation des optischen Dualpolarisationssignals durch ein Modulationssignal auf mindestens einem unteren Amplitudenpegel, der im Wesentlichen Null beträgt, und einem höheren Amplitudenpegel gewidmet wird, wobei das Zeitintervall mindestens drei aufeinanderfolgende und getrennte Zeitabschnitte aufweist,

und dadurch, dass das Verfahren zum Empfangen die folgenden aufeinanderfolgenden Schritte aufweist, die durch eine Empfangsvorrichtung umgesetzt werden:

- auf einem ersten Zeitabschnitt (41) des Zeitintervalls ein erstes Synchronisieren (52) der Empfangsvorrichtung auf einem Synchronisationsmodus innerhalb der Empfangsvorrichtung,
- auf einem zweiten Zeitabschnitt (42) des Zeitintervalls:

  ◦ Erfassen (11) in dem optischen Dualpolarisationssignal des Modulationssignals, das das optische Dualpolarisationssignal auf den Amplitudenpegeln moduliert, und
  ◦ Bestimmen (12) des optischen Signal-Rausch-Verhältnisses ausgehend von einer Leistungsmessung des Modulationssignals,

- auf einem dritten Zeitabschnitt (43) des Zeitintervalls ein zweites Synchronisieren (53) der Empfangsvorrichtung, indem ein Synchronisationsmodus verwendet wird, der einem Teil von nützlichen Daten zugeordnet wird, der in dem erhaltenen optischen Signal nach dem Zeitintervall lokalisiert wird.

10. Computerprogramm, das Anweisungen für die Ausführung eines Verfahrens nach einem der Ansprüche 1, 7 oder 9 aufweist, wenn das Programm von einem Prozessor ausgeführt wird.

11. Modul zur Bestimmung eines optischen Signal-Rausch-Verhältnisses eines optischen Dualpolarisationssignals, umfassend mindestens ein Zeitintervall, das einer Modulation gewidmet ist, wobei das Modul Folgendes aufweist:

- einen Detektor, der in dem optischen Dualpolarisationssignal ein Modulationssignal erfasst, das das optische Dualpolarisationssignal auf mindestens einem unteren Amplitudenpegel, der im Wesentlichen Null beträgt, und einem höheren Amplitudenpegel moduliert, und
- eine Einheit zur Bestimmung des optischen Signal-Rausch-Verhältnisses ausgehend von einer Leistungsmessung des Modulationssignals,
- wobei das Modul **dadurch gekennzeichnet ist, dass** das mindestens eine Zeitintervall mindestens drei aufeinanderfolgende und getrennte Zeitabschnitte aufweist:

  einen ersten Zeitabschnitt (41), umfassend eine Information, die das Ende der Übertragung von einem Teil von nützlichen Daten meldet, der in dem optischen Signal vor dem Zeitintervall lokalisiert ist, wobei der erste Abschnitt eine Synchronisation einer Empfangsvorrichtung auf einem Synchronisationsmodus innerhalb der Empfangsvorrichtung ermöglicht,
  einen zweiten Zeitabschnitt (42), auf dem das optische Signal durch das Modulationssignal auf den Amplitudenpegeln moduliert ist,
  einen dritten Zeitabschnitt (43), umfassend eine Lerninformation, die ein Ändern des Synchronisationsmodus der Empfangsvorrichtung ermöglicht, um von dem inneren Synchronisationsmodus zu einem Synchronisationsmodus überzugehen, der dem Teil von nützlichen Daten zugeordnet ist, der in dem optischen Signal nach dem Zeitintervall lokalisiert ist.

**12.** Vorrichtung zum Übertragen eines optischen Dualpolarisationssignals, **dadurch gekennzeichnet, dass** sie Folgendes aufweist:

- einen Generator des optischen Dualpolarisationssignals, wobei das optische Dualpolarisationssignal mindestens ein Zeitintervall aufweist, das einer Modulation durch ein Modulationssignal auf mindestens einem unteren Amplitudenpegel, der im Wesentlichen Null beträgt, und einem höheren Amplitudenpegel des optischen Dualpolarisationssignals gewidmet ist, wobei das mindestens eine Zeitintervall mindestens drei aufeinanderfolgende und getrennte Zeitabschnitte aufweist:

einen ersten Zeitabschnitt (41), umfassend eine Information, die das Ende der Übertragung von einem Teil von nützlichen Daten meldet, der in dem optischen Signal vor dem Zeitintervall lokalisiert ist, wobei der erste Abschnitt eine Synchronisation einer Empfangsvorrichtung auf einem Synchronisationsmodus innerhalb der Empfangsvorrichtung ermöglicht,
einen zweiten Zeitabschnitt (42), auf dem das optische Signal durch das Modulationssignal auf den Amplitudenpegeln moduliert ist,
einen dritten Zeitabschnitt (43), umfassend eine Lerninformation, die ein Ändern des Synchronisationsmodus der Empfangsvorrichtung ermöglicht, um von dem inneren Synchronisationsmodus zu einem Synchronisationsmodus überzugehen, der dem Teil von nützlichen Daten zugeordnet ist, der in dem optischen Signal nach dem Zeitintervall lokalisiert ist,

- einen Modulator während des mindestens einen Zeitintervalls des optischen Signals durch das Modulationssignal, wodurch ein modifiziertes optisches Signal ausgegeben wird,
- eine Einheit zum Übertragen des modifizierten optischen Signals in einer optischen Übertragungsleitung.

**13.** Vorrichtung zum Empfangen eines optischen Dualpolarisationssignals, **dadurch gekennzeichnet, dass** sie Folgendes aufweist:

- eine Einheit zum Empfangen des optischen Dualpolarisationssignals,
- ein Modul zur Bestimmung eines optischen Signal-Rausch-Verhältnisses des empfangenen optischen Dualpolarisationssignals nach Anspruch 11.

**Claims**

**1.** Method (1000) for determining an optical signal-to-noise ratio of a dual-polarization optical signal comprising at least one time interval dedicated to a modulation, on at least one lower amplitude level substantially equal to zero and a higher amplitude level, of said dual-polarization optical signal by a modulation signal, comprising the following steps:

- detection (11), in said dual-polarization optical signal, of the modulation signal modulating said dual-polarization optical signal on at least one lower amplitude level substantially equal to zero and a higher amplitude level, and
- determination (12) of said optical signal-to-noise ratio on the basis of a measurement of the power of said modulation signal,
- the method being **characterized in that** said at least one time interval comprises at least three successive and separate time zones:

◦ a first time zone (41) comprising information signalling the end of transmission of a portion of useful data that is contained in said optical signal before said time interval, said first zone enabling the synchronization of a reception device in a synchronization mode internal to said reception device,
◦ a second time zone (42) over which said optical signal is modulated by said modulation signal at said amplitude levels,
◦ a third time zone (43) comprising learning information enabling the synchronization mode of said reception device to be changed in order to move from said internal synchronization mode to a synchronization mode associated with a portion of useful data that is contained in said optical signal after said time interval.

**2.** Method for determining an optical signal-to-noise ratio according to Claim 1, **characterized in that** said detection step comprises a step of locating (110) a time interval (It) dedicated to a modulation, at said amplitude levels, of said optical signal by said modulation signal.

**3.** Method for determining an optical signal-to-noise ratio according to Claim 2, **characterized in that** said steps for detecting said modulation signal and for determining said optical signal-to-noise ratio are implemented over a median time zone, termed second time zone $Z_2$ (42), of said time interval.

**4.** Method for determining an optical signal-to-noise ratio according to one of Claims 1 to 3, **characterized in that** said detection step comprises a step of detecting a frequency (111) of said modulation signal, and **in that** said step of determining said optical signal-to-noise ratio comprises the following steps:

- generation (121) of a reference signal, having at least one lower amplitude level substantially equal to zero and a higher amplitude level, and of which the frequency is equal to said detected frequency,
- time shifting (122) of said reference signal with respect to said modulation signal, such that the higher amplitude level of said reference signal is synchronized with the lower level of said modulation signal, providing a lower reference signal,
- modulation (123) of said modulation signal by means of said lower reference signal, providing a first superimposed signal associated with the lower level of said modulation signal,
- measurement of the power (124) of said first superimposed signal, providing a first power $P_0$,
- time shifting (125) of said reference signal with respect to said modulation signal, such that the higher amplitude level of said reference signal is synchronized with the higher level of said modulation signal, providing a higher reference signal,
- modulation (126) of said modulation signal by means of said higher reference signal, providing a second superimposed signal associated with the higher level of said modulation signal,
- measurement of the power (127) of said second superimposed signal, providing a second power $P_1$,
- deriving (128) said optical signal-to-noise ratio on the basis of said first and second powers $P_0$ and $P_i$.

5. Method for determining an optical signal-to-noise ratio according to Claim 4, **characterized in that** said modulation steps implement a modification of the cycle ratio (Rcy) of said reference signal such that it is twice as small as that of said modulation signal.

6. Method for determining an optical signal-to-noise ratio according to Claim 4 or 5, **characterized in that** said detected frequency of the modulation signal is of the order of 1 MHz.

7. Method for transmitting a dual-polarization optical signal, **characterized in that** it comprises the following steps:

- generation (31) of said dual-polarization optical signal, said optical signal comprising at least one time interval dedicated to a modulation, by a modulation signal, on at least one lower amplitude level substantially equal to zero and a higher amplitude level, of said optical signal, said at least one time interval comprising at least three successive and separate time zones:

a first time zone (41) comprising information signalling the end of transmission of a portion of useful data that is contained in said optical signal before said time interval, said first zone enabling the synchronization of a reception device in a synchronization mode internal to said reception device,
a second time zone (42) over which said optical signal is modulated by said modulation signal at said amplitude levels,
a third time zone (43) comprising learning information enabling the synchronization mode of said reception device to be changed in order to move from said internal synchronization mode to a synchronization mode associated with a portion of useful data that is contained in said optical signal after said time interval,

- modulation (32), over said at least one time interval, of said dual-polarization optical signal by said modulation signal, providing a modified optical signal, and
- transmission (33) of said modified optical signal in an optical transmission line.

8. Dual-polarization optical signal, **characterized in that** it comprises at least one time interval dedicated to a modulation, on at least one lower amplitude level substantially equal to zero and a higher amplitude level, of said optical signal by a modulation signal, and **in that** said at least one time interval comprises at least three successive and separate time zones:

- a first time zone (41) comprising information signalling the end of transmission of a portion of useful data that is contained in said optical signal before said time interval, said first zone enabling the synchronization of a reception device in a synchronization mode internal to said reception device,
- a second time zone (42) over which said optical signal is modulated by a modulation signal at said amplitude levels,
- a third time zone (43) comprising learning information enabling the synchronization mode of said reception device to be changed in order to move from said internal synchronization mode to a synchronization mode associated with a portion of useful data that is contained in said optical signal after said time interval.

9. Method for receiving a dual-polarization optical signal, **characterized in that** it comprises the following steps:

- reception (51) of said dual-polarization optical signal, and
- location of a time interval dedicated to a modulation, on at least one lower amplitude level substantially equal to zero and a higher amplitude level, of said dual-polarization optical signal by a modulation signal, said time interval comprising at least three successive and separate time zones,

and **in that** said reception method comprises the following successive steps, implemented by a reception device:

- over a first time zone (41) of said time interval, initial synchronization (52) of said reception device in a synchronization mode internal to said reception device,
- over a second time zone (42) of said time interval:

  ◦ detection (11), in said dual-polarization optical signal, of said modulation signal modulating said dual-polarization optical signal, at said amplitude levels, and
  ◦ determination (12) of said optical signal-to-noise ratio on the basis of a measurement of the power of said modulation signal,

- over a third time zone (43) of said time interval, second synchronization (53) of said reception device by using a synchronization mode associated with a portion of useful data that is contained in said optical signal received after said time interval.

10. Computer program including instructions for implementing a method according to one of Claims 1, 7 and 9 when this program is executed by a processor.

11. Module for determining an optical signal-to-noise ratio of a dual-polarization optical signal comprising at least one time interval dedicated to a modulation, the module comprising:

- a detector detecting, in said dual-polarization optical signal, a modulation signal modulating said dual-polarization optical signal on at least one lower amplitude level substantially equal to zero and a higher amplitude level,
- a unit for determining said optical signal-to-noise ratio on the basis of a measurement of the power of said modulation signal,
- the module is **characterized in that** said at least one time interval comprises at least three successive and separate time zones:

a first time zone (41) comprising information signalling the end of transmission of a portion of useful data that is contained in said optical signal before said time interval, said first zone enabling the synchronization of a reception device in a synchronization mode internal to said reception device,
a second time zone (42) over which said optical signal is modulated by said modulation signal at said amplitude levels,
a third time zone (43) comprising learning information enabling the synchronization mode of said reception device to be changed in order to move from said internal synchronization mode to a synchronization mode associated with a portion of useful data that is contained in said optical signal after said time interval.

12. Device for transmitting a dual-polarization optical signal, **characterized in that** it comprises:

- a generator of said dual-polarization optical signal, said dual-polarization optical signal comprising at least one time interval dedicated to a modulation, on at least one lower amplitude level substantially equal to zero and a higher amplitude level, of said dual-polarization optical signal by a modulation signal, said at least one time interval comprising at least three successive and separate time zones:

a first time zone (41) comprising information signalling the end of transmission of a portion of useful data that is contained in said optical signal before said time interval, said first zone enabling the synchronization of a reception device in a synchronization mode internal to said reception device,
a second time zone (42) over which said optical signal is modulated by said modulation signal at said amplitude levels,
a third time zone (43) comprising learning information enabling the synchronization mode of said reception device to be changed in order to move from said internal synchronization mode to a synchronization mode associated with a portion of useful data that is contained in said optical signal after said time interval,

- a modulator, during said at least one time interval, of said optical signal by said modulation signal, providing a modified optical signal,
- a unit for transmitting said modified optical signal in an optical transmission line.

13. Device for receiving a dual-polarization optical signal, **characterized in that** it comprises:

- a unit for receiving said dual-polarization optical signal,
- a module for determining an optical signal-to-noise ratio of said received dual-polarization optical signal according to Claim 11.

**20**

Fig. 1

Fig. 2

Fig. 3

Fig. 4

$S_{ob}$

| Recept | — 51

| Synch$_1$ | — 52

$Z_1$

$Z_2$ — 1000

| D_S$_{mod}$ | — 11

| D_OSNR | — 12

$Z_3$ | Synch$_2$ | — 53

It

t

## Fig. 5

M_OSNR

$S_{ob}$ → | DETECT | | U_OSNR | → OSNR

64 — 65

| $\mu$P | — 62

61 — | RAM | | Pg | — 63

## Fig. 6

74    $S_{MOD}$   75        76

DATA → | GEN | — | MOD$_T$ | — | U$_T$ | → $S_{om}$

| $\mu$P | — 72

71 — | RAM | — | Pg | — 73

## Fig. 7

Fig. 8

Fig. 9

**EP 3 020 148 B1**

## RÉFÉRENCES CITÉES DANS LA DESCRIPTION

**Documents brevets cités dans la description**

- EP 2264916 A